# EUROPEAN PATENT SPECIFICATION

(11) **EP 4 437 913 B1**
(45) Date of publication and mention of the grant of the patent: **19.02.2025**
(21) Application number: 23165203.3
(22) Date of filing: 29.03.2023
(51) Int. Cl.: A47J 31/40

(54) **TEA PRODUCING APPARATUS AND METHOD**
VORRICHTUNG UND VERFAHREN ZUR HERSTELLUNG VON TEE
APPAREIL ET PROCÉDÉ DE PRODUCTION DE THÉ

(43) Date of publication of application: 02.10.2024
(73) Proprietor: Markmann Holding GmbH, 73230 Kirchheim unter Teck (DE); Valenzuela Holding GmbH, 85591 Vaterstetten (DE)
(72) Inventor: Valenzuela, Carlos, 85591 Vaterstetten (DE); Markmann, Christoph, 73230 Kirchheim unter Teck (DE)
(74) Representative: Köllner, Malte

(56) References cited:
- EP-A1- 3 342 319

## Description

### FIELD OF THE INVENTION

The invention relates to a tea producing apparatus and a corresponding method. These are typically used for producing tea, especially in the context of vending machines for beverages.

### DESCRIPTION OF RELATED ART

The world of beverage vending machines currently lacks support for tea. Almost all currently available hot beverage vending machines only offer coffee, potentially in a wide range of variations, cocoa drinks and hot water. This hot water may then be turned into tea by adding a tea bag. But the tea bag is usually stored and available separately, outside the vending machine. This results in additional effort and space requirements, as well as a poor customer or user experience. In addition, in contrast to the coffee that comes ready from the vending machine, a spoon or similar implement for stirring must be provided, and additional waste arises in the form of the tea bag and, frequently, a disposable stirrer.

Many tea making apparatuses that do not require tea bags are also known from the prior art. However, most of these are not suitable for use in beverage vending machines or similar automated beverage brewing machines.

Publications GB 952,562 A and GB 1 562 491 A describe apparatuses and methods for use in preparing beverages, e.g. tea. The beverages are brewed from beverage-forming material in solid, compacted form, such as pellets. However, the beverages, e.g. tea, are actually brewed in a beverage container, e.g. a cup, into which the pellets are delivered. This beverage container is situated outside the machine, and thus visible and/or accessible by the user, in some instances on a vibrating device in order to accelerate the dissolving of the pellets. The user sees the tea pellet falling into the cup, which does not provide a favorable user experience. A similar apparatus, with the same drawbacks, is described in GB 952,727 A. However, this apparatus additionally incorporates a grinding mechanism with which the solid, compacted beverage-forming material is crushed or disintegrated before being delivered into the cup. This makes the apparatus more complicated and requires considerably increased maintenance. None of these devices allow the brewing of tea inside the machine, and thus invisible and/or not accessible by the user. A futher problem of the mentioned prior art is that the pellets are dissolved in the drinking cup. Thus, further stirring and/or vibration means are necessary to provide a sufficiently even distribution or concentration of the tea in the cup.

A dual-purpose brewer for e.g. tea and coffee is disclosed in publication US 2011/0081466 A1. This provides a brew basket for brewing tea or similar beverages. This brew basket has an electromagnetically controlled outlet drain valve in order to retain the water in the brew basket for a sufficient time for the brewing of tea. When brewing coffe, the valve would remain open. However, no means for supplying the brew basket with tea material are provided. Thus, loose tea in form of tea leaves or similar would have to be manually inserted into the brew basket prior to each beverage preparation, making this dual-purpose brewer unsuitable for use in beverage vending machines or similar automated beverage brewing machines. Publication US 6,964,222 B1 provides a similar brew basket for fitting to existing coffee makers.

A similar device to that of US 2011/0081466 A1, but designed for using capsules of tea, coffee, etc., is described in EP 3 111 812 A1. The capsules, again, would have to be manually inserted into the device.

An automated tea brewing device is known from EP 3 936 009 A1. This has a tea brewing container with an electrically controlled valve for tea water discharge into a beverage container, and a water boiling assembly, which is described in detail. However, no means are provided for introducing the tea (in form of loose tea leaves) into the brewing container. Therefore, such a device is also unsuitable for use in beverage vending machines or similar automated beverage brewing machines.

The publication EP 3 342 319 A1 describes a beverage preparation machine which is designed for preparing beverages from a beverage ingredient in bulk, e.g. a powder. The machine comprises a beverage preparation chamber, which can be a mixing chamber, a brewing chamber, or a drinking cup. A fan supplies a flow of air to an area between the container in which the beverage ingredient is stored and the beverage preparation chamber. This flow is essentially horizontal and forms a barrier preventing steam, mist, or vapour rising from the beverage preparation chamber to reach the outlet of the storage container. Specifics of producing tea using this beverage preparation machine are not discussed.

### OBJECT OF THE INVENTION

It is therefore an object of the present invention to provide an apparatus and a method for producing tea suitable for use in a vending machine for beverages or similar automated beverage brewing machines.

### BRIEF SUMMARY OF THE INVENTION

This object is achieved by the invention as claimed in the independent claims. Advantageous embodiments are described in the dependent claims, the disclosure of which is hereby incorporated into the description by reference.

The use of the singular shall not exclude the plural, which shall also apply in the reverse sense, unless otherwise disclosed.

Thus, a tea producing apparatus is proposed. Said tea producing apparatus comprises a storage container for tea pellets, a supply of a liquid of a predefined temperature, and a dissolution container. The dissolution container receives at least one tea pellet from the storage container as well as the liquid and allows the at least one tea pellet to dissolve in the liquid. The tea producing apparatus further comprises a feeding mechanism for transporting the at least one tea pellet from the storage container to the dissolution container. The dissolution container comprises an outlet opening for releasing its content into a beverage container. The tea producing apparatus further comprises means for temporarily retaining the at least one tea pellet in the dissolution container. In this context, temporarily is to be understood in such a way that the tea pellet cannot leave the dissolution container immediately after having been fed from the storage container to the dissolution container. For this purpose, the dissolution container comprises a grating arranged in the outlet opening or upstream of the outlet opening for temporarily retaining the at least one tea pellet during the dissolving process. In this context, temporarily is to be understood as until the tea pellet has been dissolved to one or more remnants which are smaller than the size of the openings in the grating. These remnants then fall through the grating, leaving no residue.

Tea pellets are known from the prior art, e.g. from GB 952,562 A, GB 952,727 A and GB 1 562 491 A. Tea pellets suitable for use with the proposed tea producing apparatus may be selected from a wide range of commercially available products. They may be made either from extracts or from plant parts (see glossary). Tea brewed from pellets made from compressed plant parts leaves a slight residue, which results in a "naturally cloudy" beverage, which is acceptable, or in some cases even desirable. Tea pellets may also contain additional ingredients such as for example dried milk, sugar, or spices.

The supply of a liquid may be of any known type capable of supplying a liquid of a predefined temperature suitable for the brewing of tea. For example, the liquid could be water, tea, milk, milk alternatives, or a brewed beverage, and the predefined temperature may be any temperature required for brewing the type of tea to be produced. For the most common applications, for example, the liquid would be hot water, typically with a temperature between 70 and 98 °C depending on the type of tea being brewed. A well-known example requiring a cold liquid would be so-called "iced tea" or cold brewed teas.

This tea producing apparatus allows the brewing of tea to occur in a completely automated fashion, with no part of the tea production occurring outside the machine, i.e. visible and/or accessible to the user. It is thus well suited for use in beverage vending machines or similar machines, in which it can be incorporated. Only the beverage container, which receives the beverage for the user to consume, is situated outside the machine, and thus visible and accessible by the user. There is no need for externally supplied tea bags and/or stirring devices, resulting in a simple and clean user experience and less waste. From initiating the beverage production to delivery of the final tea product to the beverage container, no manual intervention is required. Furthermore, by completely or partially dissolving the tea pellet in the dissolution container of the tea producing apparatus and by releasing its content into the separate beverage container, a well mixed beverage with sufficiently even distribution or concentration (sufficiently homogeneous composition) of the tea is provided to the consumer without the need of additional stirring means. Thus, the problem of the prior art that the tea pellet dissolves at the bottom of the drinking cup leading to an uneven distribution or concentration of the tea in the cup is thereby eliminated without the need of additional stirring devices as used in the prior art.

The grating prevents tea pellets from clogging an outlet opening and/or a valve. The grating also ensures that the pellets are retained in an optimum position in the dissolution container, where the liquid can optimaly flow past the pellets and/or reach the pellets from all sides.

The means for temporarily retaining the at least one tea pellet can be realized in a number of ways. One way is to adapt the outlet opening of the dissolution container to the size and / or shape of the pellet in such a way as to retain the pellet. The outlet opening can e.g. be smaller than the tea pellet, so that the pellet will not drop through the outlet opening into the beverage container immediately after transport to the dissolution container. Or the pellet may have a basically spherical shape while the outlet opening has a rectangular cross-section. The dimensions of the rectangular cross-section will then be chosen so as to prevent the undissolved pellet from passing the outlet opening.

In another embodiment the means for temporarily retaining the at least one tea pellet comprise a valve for opening and closing the outlet opening. Preferably, the tea producing apparatus then also has means for controlling the duration of the dissolving process by operating the valve. The means for controlling the duration of the dissolving process ensure that the valve at the outlet opening remains closed for a long enough time interval that the tea pellet can dissolve to a sufficient extent in the liquid. This time interval may vary with the type of tea to be produced and/or the type and/or size of tea pellet that is used.

Tea production may be further optimized if the valve is a proportional valve. Such a valve makes the cross section of the opening of the valve adjustable, allowing for variations in fluid flow. For example, this allows to open the valve earlier, and allow the tea to slowly drain into the beverage container while the tea pellet is still dissolving in the dissolution container. The advantage of this approach is that the waiting time for the user or customer appears less frustrating, since some activity is visible - the beverage container is already being filled. Alternatively, the valve opening can be adjusted to open wider for faster fluid flow and higher turbulence, resulting in greater homogeneity of the tea.

It is especially advantageous if the grating has openings with an opening width between 0.5 and 1.5 mm, i.e. the elongated elements forming said grating are separated by this opening width. If the grating is configured to have a mesh-like form, the opening width can also be interpreted as the size of the holes in the mesh. If the opening width is in said range, the tea pellet is retained by the grating until it has dissolved to such an extent that the remaining undissolved parts of the pellet are smaller than the opening width. These smaller undissolved parts may then pass the grating. If the valve is opened, they may even leave the dissolution container. However, these remains are small enough that they dissolve completely either during passage of the outlet into a beverage container, or immediately upon entering said beverage container or shortly thereafter; in any case before the tea is consumed by a consumer.

Additional turbulence may be imparted on the tea and/or the liquid dissolving the tea pellets, if the openings in the grating have side walls, and if said side walls are curved or inclined with reference to the perpendicular of the plane of the grating. For example, the grating could thus create an inclined fluid flow with a sideways component, or the pressure and/or velocity of the fluid flowing through the grating could be varied. In particular, openings in the form of holes or bores may be conical, or not vertical, i.e. not perpendicular to the plane of the grating. The additional turbulence enhances the dissolution of the tea pellets and ensures that the produced beverage is of sufficiently homogeneous composition.

Preferably, the feeding mechanism is configured to transport exactly one tea pellet at a time from the storage container to the dissolution container. This ensures that each portion of tea that is produced is of equal strength.

In order to produce tea of various strengths, and/or to fill beverage containers of differing sizes, the feeding mechanism may advantageously be so designed that a variable number of tea pellets is selectable for transporting from the storage container to the dissolution container. A simple example would be to allow the previously described feeding mechanism to be activated a variable number of times per tea production. However, a feeding mechanism capable of transporting a variable number of tea pellets, in particular more than one, at a time is also possible. Also, depending on the size of the used pellets, the number of tea pellets needed may vary. In an example, a cup of tea would be produced from one pellet, a strong cup of tea would be produced from two pellets, and a pot of tea would be produced from three or four pellets. In a different example, a cup of tea would be produced from one to two pellets, a strong cup of tea would be produced from three to five pellets, and a pot of tea would be produced from six or more pellets. The pot would, of course, require a larger amount of liquid. This may be supplied separately, i.e. through a separate pipe directly into the beverage container, or through the dissolution container. The selection of a strong cup of tea, a pot or the like would have to be done by the consumer. Corresponding selection means accessible by the consumer would have to be present for this option.

The feeding mechanism can be kept especially simple if it is configured to operate based on gravity. In such a case, no additional drive motor is required, resulting in reduced costs and lower maintenance requirements. However, many alternative forms of feeding mechanism are possible, e.g. based on spindles, transport screws, conveyors etc. Also, a feeding mechanism using a vacuum conveying system or positive air pressure conveying system is possible.

An especially efficient storage, transporting and general handling of the tea pellets can be achieved if the storage container and/or the feeding mechanism are configured for tea pellets with a rounded or spherical or cuboid or pill-shaped or tablet-shaped form. Pill-shaped refers to a substantially cylindrical shape with rounded, preferably semi-spherical, ends, while tablet shaped refers to a substantially flat cylindrical shape, which may optionally have rounded edges. Generally, the tea producing apparatus may be configured to work with any of the previously mentioned commercially available tea pellets. Round shapes are preferred due to their reduced contact area with one another.

The object of the invention is also achieved by a method. In what follows, individual steps of the method will be described in more detail.

In particular, the object is achieved by a method for producing tea using the tea producing apparatus as described above. The method comprises the following steps:
(a) transporting at least one tea pellet from the storage container to the dissolution container,
(b) supplying a liquid of a predefined temperature to the dissolution container,
(c) temporarily retaining the at least one pellet in the dissolution container by means of the grating arranged in the outlet opening or upstream of the outlet opening in the dissolution container; and
(d) dissolving the at least one tea pellet in the liquid, and
(e) pouring the content of the dissolution container into the beverage container.

If the tea producing apparatus is provided with a valve, the duration of the dissolving process in the dissolution container can controlled by operating the valve. The valve can be opened after a predefined duration, thereby pouring the content of the dissolution container into the beverage container.

In a preferred embodiment of the above-described method for producing tea, the at least one tea pellet is temporarily retained by the grating during the dissolving process, as described further above. The grating ensures that the at least one pellet is retained in an optimum position in the dissolution container, where the liquid can optimally flow past the pellet and/or reach it from all sides. The valve is opened before complete dissolution of the tea pellet. Consequently, an undissolved remainder of the tea pellet remains on the grating. After opening the valve, additional liquid of a predefined temperature is supplied to the dissolution container, and the additional liquid passes the undissolved remainder of the tea pellet, thereby further dissolving it. The tea pellet is retained by the grating until it has dissolved to such an extent that the remaining undissolved parts of the pellet are smaller than the opening width of the grating. These smaller undissolved parts may then pass the grating. However, these remains are small enough, so that they dissolve completely before the tea is consumed by a consumer. The grating may also impart additional turbulence on the tea and/or the liquid dissolving the tea pellet, enhancing its dissolution and ensuring that the produced beverage is of sufficiently homogeneous composition. This method results in a shorter period of apparent inactivity of the tea producing apparatus, thus improving the user experience.

### BRIEF DESCRIPTION OF THE SEVERAL VIEWS OF THE DRAWINGS

Other objects and advantages of the present invention may be ascertained from a reading of the specification and appended claims in conjunction with the drawings therein. For a more complete understanding of the present invention, reference is established to the following description of embodiments made in connection with the accompanying drawings. The exemplary embodiments are shown schematically in the figures. Specifically,
- Fig. 1: shows a schematic representation of a tea producing apparatus as described;
- Fig. 2A: shows a first example of a grating that may be used in an embodiment of the tea producing apparatus;
- Fig. 2B: shows a second example of a grating that may be used in an embodiment of the tea producing apparatus;
- Fig. 2C: shows a third example of a grating that may be used in an embodiment of the tea producing apparatus;
- Fig. 2D: shows a fourth example of a grating that may be used in an embodiment of the tea producing apparatus, wherein the openings in the grating have a conical shape;
- Fig. 2E: shows a fifth example of a grating that may be used in an embodiment of the tea producing apparatus; and
- Fig. 2F: shows two examples of vertical cross-sections of openings in a grating having side walls that are curved or inclined to the perpendicular of the plane of the grating.

### DETAILED DESCRIPTION OF THE INVENTION

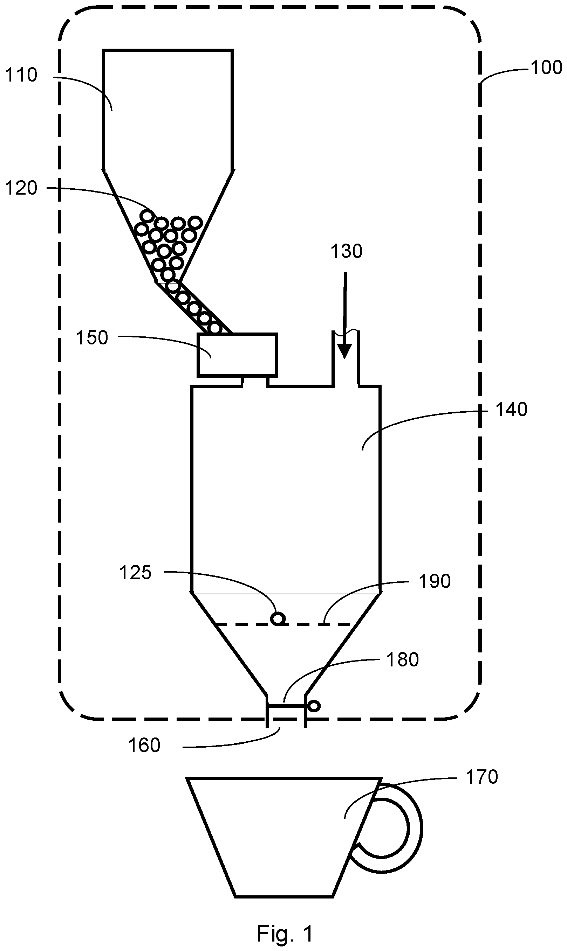

Fig. 1 shows a tea producing apparatus as described above, which is e.g. incorporated in a beverage vending machine 100, indicated by a dashed line. Said tea producing apparatus has a storage container 110 for tea pellets 120, a supply 130 of a liquid of a predefined temperature, preferably hot water, a dissolution container 140 for dissolving at least one tea pellet 125 in order to produce tea, a feeding mechanism 150 for transporting tea pellets from the storage container 110 to the dissolution container 140, and an outlet opening 160. The outlet opening 160 allows to drain the produced tea from the dissolution container 140 into a beverage container 170, for example, a cup.

Preferably, the outlet opening 160 is opened and closed by a valve 180. The valve 180 is preferably operated by an automatic control (not shown). This control ensures that the valve 180 remains closed for an appropriate time interval to ensure sufficient dissolution of the one or more tea pellets 125 in the water 130 in the dissolution container 140. The time interval may vary with the type of tea being produced and/or the type and size of pellets 120 for which the apparatus has been configured, and/or the desired strength of the tea.

A grating 190 is preferably arranged above the outlet opening 160 in order to temporarily retain the at least one tea pellet 125 in an optimum position in the dissolution container 140 until it has dissolved either completely or into sufficiently small remnants. The opening width of the openings in the grating 190 is chosen correspondingly, e.g. so that the maximum size of undissolved tea pellet remnants that could pass the grating is less than 5-15 % of the original size of the pellet 125. An opening width between 0,5 and 1,5 mm is especially preferable.

The feeding mechanism 150 may preferably be configured to transport only one tea pellet at a time from the storage container 110 to the dissolution container 140. Many variations of single pellet feeding mechanism are known in the art. If more than one pellet is desired, e.g. for a stronger cup of tea, such a transport mechanism 150 would be activated more than once.

It is possible, however, that the feeding mechanism is designed or configured in such a way that the amount of tea pellets 120 to be transported from the storage container 110 to the dissolution container 140 is selectable and may even be more than one at a time. Such a feeding mechanism 150 also allows for producing tea of varying strengths, or alternatively varying volume, e.g. for either a cup 170 or a teapot.

Preferably, the feeding mechanism 150 operates based on gravity, allowing the one or more pellets to drop from the storage container 110 into the dissolution container 140.

If the valve 180 is a proportional valve, the corresponding control additionally regulates how far the valve is opened, depending on the desired fluid flow for optimally producing the selected form of tea. For example, in some cases it could be more desirable to slowly drain the contents of the dissolution container 140 into the beverage container 170, allowing for additional time for the one or more tea pellets 125 to dissolve completely before reaching the beverage container 170, while in other cases it may be more desirable to drain the dissolution container 140 as quickly as possible, resulting in maximized turbulence and consequently a better mixing and homogenization of the tea.

Variations of the described apparatus having a plurality of storage containers for different types of tea are certainly possible. The control would then select the appropriate behaviour of the valve depending on the type of tea selected by the user or customer.

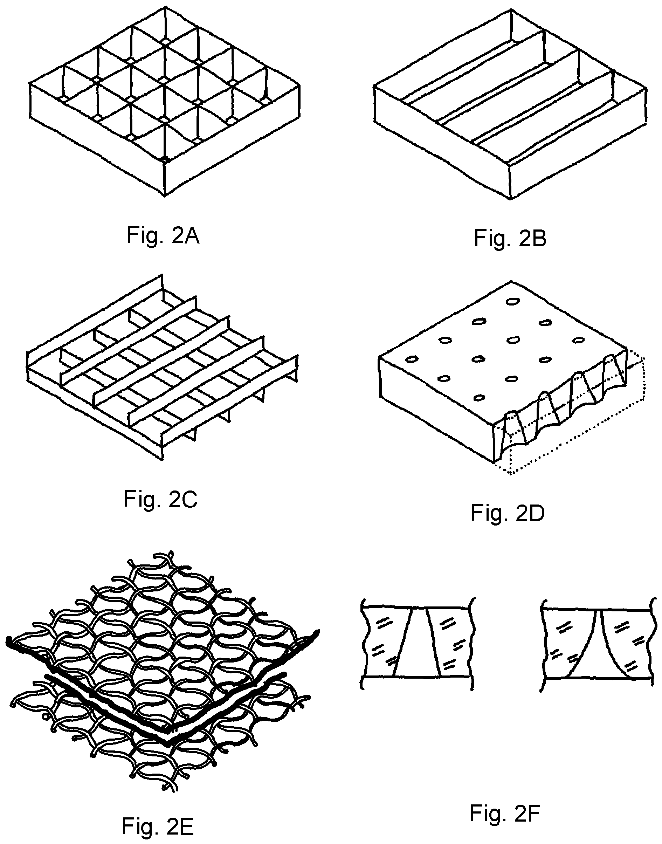

The sub-figures of Fig. 2 show various exemplary embodiments of the grating 190 which may be incorporated into the tea producing apparatus.

The grating shown in Fig. 2A has a form sililar to an egg crate, with two sets of wall-like elongated elements arranged perpendicular to each other, resulting in a grid-like arrangement of square openings.

Fig. 2B shows a simpler type of grating which only has one set of parallel wall-like elongated elements arranged in a frame, resulting in long and narrow rectangular openings.

Fig. 2C shows a grating comprised of two perpendicular sets of bar-like elongated elements arranged in separate layers, i.e. one set above the other. This is simpler to manufacture, as no frame surrounding the grating is necessary.

The grating shown in Fig. 2D comprises a flat plate with vertical holes arranged regularly, e.g. on the intersection points of a grid. In a simple embodiment (not shown), these holes could be simple cylindrical bores of a constant diameter. However, in the preferred embodiment shown, the holes have a conical shape, typically with the narrow end on the upstream end. In order to illustrate this, a portion of the grating is cut away in this figure, showing vertical cross-sections of a row of these holes. Such an arrangement allows the pressure and/or velocity of the liquid to vary as it flows through the holes, increasing turbulence, which can result in better mixing and homogenization of the tea being produced.

Fig. 2E shows a grating comprised of two layers of mesh, e.g. wire mesh or similar. This is especially simple and cheap to produce. In an even simpler embodiment (not shown), the grating could comprise only one layer of mesh. The size of the openings in the grating and how smoothly the liquid flows through the grating may be varied by varying the number of layers.

Fig. 2F shows vertical cross-sections of two possible forms of openings in a grating similar to that shown in Fig. 2D. The side walls of the openings are, for example, curved (shown on the right) or inclined to the perpendicular of the plane of the grating (shown on the left).

The tea production may be further enhanced if the outlet opening of the dissolution container releases its content first into one or more additional processing containers for further processing before it is finally provided to the beverage container. Such further processing may include for example adding and/or stirring in milk, other liquids (such as milk substitutes, lemon juice, cocoa, liqueurs, coffee, etc.), spices, sugar, sweetening alternatives, and so on. Alternatively, the other liquids mentioned for enhancing the final tea product may also be added directly to the beverage container through a separate pipe. Adding additional water or other liquids through such a separate pipe directly into the beverage container may also contribute to increasing turbulence.

Depending on the size and type of tea pellets used, the tea production apparatus may be further optimized by including crushing means that crush the tea pellets into smaller pieces before they are dissolved by the liquid in the dissolution container. The crushing means could be arranged upstream of the dissolution container, i.e. adjacent to the feeding mechanism, or within the dissolution container.

### GLOSSARY

### Beverage container

A beverage container is a vessel used to contain beverages. Typical examples of beverage containers, from which the beverage is consumed, are cups, mugs, glasses etc. However, a beverage container may also be an intermediate container from which the beverage may be transferred into one of the above-mentioned examples for drinking. Examples of such intermediate containers are bottles, carafes, flasks, pots etc.

### Brewing

Brewing is used as a generalized expression for the process of making tea (including herbal tea) or other beverages, e.g. coffee. Typically, this involves steeping tea leaves or other plant parts in hot or even boiling water. In some cases, e.g. instant tea or other forms of pre-extracted tea, the material may be completely dissolved in the water.

### Grating

A grating is any regularly spaced collection of essentially identical, parallel, elongated elements. Gratings usually consist of a single set of elongated elements, but can consist of two sets, in which case the second set is usually perpendicular to the first. This results in a mesh-like structure forming a plurality of openings which allow e.g. a fluid to pass. The primary characteristic of a grating is its width, i.e. the distance between the parallel elongated elements. A grating can filter or retain parts mixed in the fluid that have a size larger than the width.

### Pellets

Pellets are small particles typically created by compressing an original material (see https://en.wikipedia.org/wiki/Pellet). In this document, only tea pellets are relevant. There are two principal types of tea pellets: A first type of tea pellets comprises compressed plant material, e.g. tea leaves, while a second type of tea pellets comprises compressed plant extracts, e.g. instant tea, that completely dissolve in water without leaving any residue.

### Tea

Tea is an aromatic beverage prepared by pouring hot or boiling water over cured or fresh leaves of *Camellia sinensis,* an evergreen shrub native to East Asia. The leaf material may be substantially fermented (i.e. black tea), semi-fermented (i.e. oolong tea), or substantially unfermented (i.e. green tee). In the context of this invention, however, tea may also refer to infusions of fruit, leaves, flower material (e.g. petals) or other plant parts of other plants than *Camellia sinensis,* such as e.g. steeps of rosehip, chamomile, or rooibos. Where it is necessary to distinguish these, the latter are referred to as herbal teas. The term tea is also intended to include the product of blending two or more of any of these teas. The tea may be additionally flavoured and/or spiced.

### REFERENCE NUMERALS

- 100: beverage vending machine
- 110: storage container
- 120, 125: tea pellet(s)
- 130: supply of a liquid of predefined temperature
- 140: dissolution container
- 150: feeding mechanism
- 160: outlet opening
- 170: beverage container
- 180: valve
- 190: grating

### REFERENCES CITED

cited patent literature
EP 3 111 812 A1
EP 3 342 319 A1
EP 3 936 009 A1
GB 952,562 A
GB 952,727 A
GB 1 562 491 A
US 6,964,222 B1
US 2011/0081466 A1

## Claims

1. Tea producing apparatus comprising:
1.1 a storage container (110) for tea pellets (120);
1.2 a supply (130) of a liquid of a predefined temperature;
1.3 a dissolution container (140) for receiving at least one tea pellet (125) from the storage container (110) and for receiving the liquid and for allowing the at least one tea pellet (125) to dissolve in the liquid;
1.4 a feeding mechanism (150) for transporting the at least one tea pellet from the storage container (110) to the dissolution container (140);
1.5 the dissolution container (140) comprising an outlet opening (160) for releasing its content into a beverage container (170); and
1.6 means for temporarily retaining the at least one tea pellet (125) in the dissolution container (140);
1.6.1 **characterised in that**
the means for temporarily retaining the at least one tea pellet (125) are realized by a grating (190) arranged in the outlet opening (160) or upstream of the outlet opening (160) in the dissolution container (140).

2. Tea producing apparatus according to the preceding claim,
**characterized in that**
the means for temporarily retaining the at least one tea pellet (125) comprise
2.1 a valve (180) for opening and closing the outlet opening (160); and
2.2 means for controlling the duration of the dissolving process in the dissolution container (140) by operating the valve (180).

3. Tea producing apparatus according to the immediately preceding claim,
**characterized in that**
the valve (180) is a proportional valve.

4. Tea producing apparatus according to any one of the preceding claims,
**characterized by**
the grating (190) having openings with an opening width between 0.5 and 1.5 mm.

5. Tea producing apparatus according to any one of the preceding claims,
5.1 the openings in the grating (190) having side walls;
**characterized in that**
5.1.1 said side walls are curved or inclined to the perpendicular of the plane of the grating.

6. Tea producing apparatus according to any one of the preceding claims,
**characterized in that**
the feeding mechanism (150) is configured to transport exactly one tea pellet at a time from the storage container (110) to the dissolution container (140).

7. Tea producing apparatus according to any one of the preceding claims,
**characterized in that**
the feeding mechanism (150) is designed in such a way that a variable number of tea pellets (120, 125) is selectable for transporting from the storage container (110) to the dissolution container (140).

8. Tea producing apparatus according to any one of the preceding claims,
**characterized in that**
the feeding mechanism (150) is configured to operate based on gravity.

9. Tea producing apparatus according to any one of the preceding claims,
**characterized in that**
the storage container (110) and/or the feeding mechanism (150) are configured for tea pellets (120, 125) with a rounded or spherical or cuboid or pill-shaped or tablet-shaped form.

10. Method for producing tea using the tea producing apparatus according to any of the preceding claims,
the method comprising the following steps:
10.1 transporting at least one tea pellet (125) from the storage container (110) to the dissolution container (140);
10.2 supplying a liquid of a predefined temperature (130) to the dissolution container (140);
10.3 temporarily retaining the at least one tea pellet (125) in the dissolution container (140) by means of the grating (190) arranged in the outlet opening (160) or upstream of the outlet opening (160) in the dissolution container (140);
10.4 dissolving the at least one tea pellet (125) in the liquid; and
10.5 pouring the content of the dissolution container (140) into the beverage container (170).

11. Method for producing tea according to the immediately preceding claim,
**characterized in that**
11.1 the tea producing apparatus is provided with the valve (180) according to any one of claims 2 or 3;
11.2 wherein the duration of the dissolving process in the dissolution container (140) is controlled by opening the valve (180) after a predefined duration.

12. Method for producing tea according to the immediately preceding claim,
**characterized in that**
12.1 the at least one tea pellet (125) is temporarily retained by the grating (190) during the dissolving process;
12.2 the valve (180) is opened before complete dissolution of the tea pellet (125),
12.2.1 wherein an undissolved remainder of the tea pellet (125) remains on the grating (190);
12.3 after opening the valve (180), additional liquid (130) is supplied to the dissolution container (140);
12.4 the additional liquid (130) passes the undissolved remainder of the tea pellet (125), thereby further dissolving it.

## Patentansprüche

1. Teeerzeugungsgerät, umfassend:
1.1 einen Vorratsbehälter (110) für Teepellets (120);
1.2 eine Versorgung (130) mit einer Flüssigkeit mit vordefinierter Temperatur;
1.3 einen Auflösungsbehälter (140) zur Aufnahme mindestens eines Teepellets (125) aus dem Vorratsbehälter (110) und zur Aufnahme der Flüssigkeit und zum Auflösen des mindestens einen Teepellets (125) in der Flüssigkeit;
1.4 einen Zuführmechanismus (150) zum Befördern des mindestens einen Teepellets aus dem Vorratsbehälter (110) in den Auflösungsbehälter (140);
1.5 der Auflösungsbehälter (140) umfasst eine Auslassöffnung (160) zur Abgabe seines Inhalts in einen Getränkebehälter (170); und
1.6 Mittel zum vorübergehenden Zurückhalten des mindestens einen Teepellets (125) im Auflösungsbehälter (140);
1.6.1 **dadurch gekennzeichnet, dass**
die Mittel zum vorübergehenden Zurückhalten des mindestens einen Teepellets (125) durch ein in der Auslassöffnung (160) oder stromaufwärts der Auslassöffnung (160) im Auflösungsbehälter (140) angeordnetes Gitter (190) verwirklicht sind.

2. Teeerzeugungsgerät nach dem vorhergehenden Anspruch,
**dadurch gekennzeichnet, dass**
die Mittel zum vorübergehenden Zurückhalten des mindestens einen Teepellets (125) folgendes umfassen
2.1 ein Ventil (180) zum Öffnen und Schließen der Auslassöffnung (160); und
2.2 Mittel zur Steuerung der Dauer des Auflösungsprozesses im Auflösungsbehälter (140) durch Betätigen des Ventils (180).

3. Teeerzeugungsgerät nach dem unmittelbar vorhergehenden Anspruch,
**dadurch gekennzeichnet, dass**
das Ventil (180) ein Proportionalventil ist.

4. Teeerzeugungsgerät nach irgendeinem der vorhergehenden Ansprüche,
**dadurch gekennzeichnet, dass**
das Gitter (190) Öffnungen mit einer Öffnungsweite zwischen 0,5 und 1,5 mm aufweist.

5. Teeerzeugungsgerät nach irgendeinem der vorhergehenden Ansprüche,
5.1 wobei die Öffnungen des Gitters (190) Seitenwände aufweisen;
**dadurch gekennzeichnet, dass**
5.1.1 die Seitenwände gekrümmt oder gegen die Senkrechte zur Ebene des Gitters geneigt sind.

6. Teeerzeugungsgerät nach irgendeinem der vorhergehenden Ansprüche,
**dadurch gekennzeichnet, dass**
der Zuführmechanismus (150) so ausgebildet ist, dass er jeweils genau ein Teepellet aus dem Vorratsbehälter (110) in den Auflösungsbehälter (140) befördert.

7. Teeerzeugungsgerät nach irgendeinem der vorhergehenden Ansprüche,
**dadurch gekennzeichnet, dass**
der Zuführmechanismus (150) so ausgebildet ist, dass eine variable Anzahl von Teepellets (120, 125) zur Beförderung aus dem Vorratsbehälter (110) in den Auflösungsbehälter (140) wählbar ist.

8. Teeerzeugungsgerät nach irgendeinem der vorhergehenden Ansprüche,
**dadurch gekennzeichnet, dass**
der Zuführmechanismus (150) so ausgebildet ist, dass er auf der Grundlage der Schwerkraft arbeitet.

9. Teeerzeugungsgerät nach irgendeinem der vorhergehenden Ansprüche,
**dadurch gekennzeichnet, dass**
der Vorratsbehälter (110) und/oder der Zuführmechanismus (150) für Teepellets (120, 125) mit einer runden oder kugelförmigen oder quaderförmigen oder pillenförmigen oder tablettenförmigen Form ausgebildet sind.

10. Verfahren zum Erzeugen von Tee unter Verwendung des Teeerzeugungsgerätes nach irgendeinem der vorangehenden Ansprüche,
wobei das Verfahren die folgenden Schritte umfasst:
10.1 Befördern mindestens eines Teepellets (125) aus dem Vorratsbehälter (110) in den Auflösungsbehälter (140);
10.2 Zuführen einer Flüssigkeit mit einer vordefinierten Temperatur (130) in den Auflösungsbehälter (140);
10.3 vorübergehendes Zurückhalten des mindestens einen Teepellets (125) im Auflösungsbehälter (140) mittels des in der Auslassöffnung (160) oder stromaufwärts der Auslassöffnung (160) im Auflösungsbehälter (140) angeordneten Gitters (190);
10.4 Auflösen des mindestens einen Teepellets (125) in der Flüssigkeit; und
10.5 Ausgießen des Inhalts des Auflösungsbehälters (140) in den Getränkebehälter (170).

11. Verfahren zum Erzeugen von Tee nach dem unmittelbar vorhergehenden Anspruch,
**dadurch gekennzeichnet, dass**
11.1 das Teeerzeugungsgerät mit dem Ventil (180) nach einem der Ansprüche 2 oder 3 versehen ist;
11.2 wobei die Dauer des Auflösungsvorganges im Auflösungsbehälter (140) durch Öffnen des Ventils (180) nach einer vorgegebenen Dauer gesteuert wird.

12. Verfahren zum Erzeugen von Tee nach dem unmittelbar vorhergehenden Anspruch,
**dadurch gekennzeichnet, dass**
12.1 das mindestens eine Teepellet (125) während des Auflösungsvorganges vorübergehend durch das Gitter (190) zurückgehalten wird;
12.2 das Ventil (180) vor der vollständigen Auflösung des Teepellets (125) geöffnet wird,
12.2.1 wobei ein ungelöster Rest des Teepellets (125) auf dem Gitter (190) verbleibt;
12.3 nach dem Öffnen des Ventils (180) wird dem Auflösungsbehälter (140) zusätzliche Flüssigkeit (130) zugeführt;
12.4 die zusätzliche Flüssigkeit (130) passiert den ungelösten Rest des Teepellets (125) und löst ihn dadurch weiter auf.

## Revendications

1. Appareil de production de thé comprenant
1.1 un récipient de stockage (110) pour des pastilles de thé (120) ;
1.2 une réserve (130) d'un liquide à une température prédéfinie ;
1.3 un récipient de dissolution (140) destiné à recevoir au moins une pastille de thé (125) du récipient de stockage (110) et à recevoir le liquide et à permettre à la au moins une pastille de thé (125) de se dissoudre dans le liquide ;
1.4 un mécanisme d'alimentation (150) pour transporter au moins une pastille de thé du récipient de stockage (110) au récipient de dissolution (140) ;
1.5 le récipient de dissolution (140) comprend une ouverture de sortie (160) pour libérer son contenu dans un récipient à boisson (170) ; et
1.6 des moyens pour retenir temporairement la au moins une pastille de thé (125) dans le récipient de dissolution (140) ;
1.6.1 **caractérisé par le fait que**
les moyens pour retenir temporairement la au moins une pastille de thé (125) sont réalisés par une grille (190) disposée dans l'ouverture de sortie (160) ou en amont de l'ouverture de sortie (160) dans le récipient de dissolution (140).

2. Appareil de production de thé selon la revendication précédente,
**caractérisé par le fait que**
les moyens pour retenir temporairement la au moins une pastille de thé (125) comprennent
2.1 une soupape (180) pour ouvrir et fermer l'ouverture de sortie (160) ; et
2.2 des moyens pour contrôler la durée du processus de dissolution dans le récipient de dissolution (140) en actionnant la soupape (180).

3. Appareil de production de thé selon la revendication immédiatement précédente,
**caractérisé par le fait que**
la soupape (180) est une soupape proportionnelle.

4. Appareil de production de thé selon l'une quelconque des revendications précédentes,
**caractérisé par**
la grille (190) a des ouvertures d'une largeur comprise entre 0,5 et 1,5 mm.

5. Appareil de production de thé selon l'une quelconque des revendications précédentes,
5.1 les ouvertures dans la grille (190) ont des parois latérales ;
**caractérisé par le fait que**
5.1.1 lesdites parois latérales sont incurvées ou inclinées par rapport à la perpendiculaire du plan de la grille.

6. Appareil de production de thé selon l'une quelconque des revendications précédentes,
**caractérisé par le fait que**
le mécanisme d'alimentation (150) est configuré pour transporter exactement une pastille de thé à la fois du récipient de stockage (110) au récipient de dissolution (140).

7. Appareil de production de thé selon l'une quelconque des revendications précédentes,
**caractérisé par le fait que**
le mécanisme d'alimentation (150) est conçu de telle sorte qu'un nombre variable de pastilles de thé (120, 125) peut être sélectionné pour être transporté du récipient de stockage (110) au récipient de dissolution (140).

8. Appareil de production de thé selon l'une quelconque des revendications précédentes,
**caractérisé par le fait que**
le mécanisme d'alimentation (150) est configuré pour fonctionner par gravité.

9. Appareil de production de thé selon l'une quelconque des revendications précédentes,
**caractérisé par le fait que**
le récipient de stockage (110) et/ou le mécanisme d'alimentation (150) sont configurés pour des pastilles de thé (120, 125) ayant une forme arrondie ou sphérique ou cubique ou en forme de pilule ou de tablette.

10. Procédé de production de thé utilisant l'appareil de production de thé selon l'une quelconque des revendications précédentes,
le procédé comprenant les étapes suivantes :
10.1 transport d'au moins une pastille de thé (125) du récipient de stockage (110) au récipient de dissolution (140) ;
10.2 fournir un liquide à une température prédéfinie (130) au récipient de dissolution (140) ;
10.3 retenir temporairement la au moins une pastille de thé (125) dans le récipient de dissolution (140) au moyen de la grille (190) disposée dans l'ouverture de sortie (160) ou en amont de l'ouverture de sortie (160) dans le récipient de dissolution (140) ;
10.4 dissoudre la au moins une pastille de thé (125) dans le liquide ; et
10.5 verser le contenu du récipient de dissolution (140) dans le récipient à boisson (170).

11. Procédé de fabrication de thé selon la revendication immédiatement précédente,
**caractérisé par le fait que**
11.1 l'appareil de production de thé est muni de la soupape (180) selon l'une quelconque des revendications 2 ou 3 ;
11.2 dans lequel la durée du processus de dissolution dans le récipient de dissolution (140) est contrôlée par l'ouverture de la soupape (180) après une durée prédéfinie.

12. Procédé de fabrication de thé selon la revendication immédiatement précédente,
**caractérisé par le fait que**
12.1 la au moins une pastille de thé (125) est temporairement retenue par la grille (190) pendant le processus de dissolution ;
12.2 la soupape (180) est ouverte avant la dissolution complète de la pastille de thé (125),
12.2.1 un reste non dissous de la pastille de thé (125) reste sur la grille (190) ;
12.3 après l'ouverture de la soupape (180), du liquide supplémentaire (130) est fourni au récipient de dissolution (140) ;
12.4 le liquide supplémentaire (130) passe sur le reste non dissous de la pastille de thé (125), la dissolvant ainsi davantage.
